# EUROPEAN PATENT SPECIFICATION

(11) **EP 1 365 558 B1**
(45) Date of publication and mention of the grant of the patent: **28.06.2006**
(21) Application number: 03100303.1
(22) Date of filing: 12.02.2003
(51) Int. Cl.: H04L 29/06, H04M 7/00

(54) **Reusable multi-protocol meta-architecture for voice-over-ip playback**
Wiederverwendbare Multiprotokolmeta-Architektur für Voice-over-IP Wiedergabe
Meta-architecture multiprotocolaire réutilisable pour la transmission de voix sur ip

(30) Priority: 23.05.2002 US 154245
(43) Date of publication of application: 26.11.2003
(73) Proprietor: Zarlink Semiconductor V.N. Inc., Irvine, CA 92612 (US)
(72) Inventor: BARRACK, Craig, I., 92612, Irvine (US); YIK, James, 92612, Mission Viejo (US)
(74) Representative: Harding, Richard Patrick

(56) References cited:
- US-A- 5 630 005
- US-A1- 2001 005 365
- PETRYNA B ET AL: "MEETING THE ENGINEERING CHALLENGES OF VOIP COMMUNICATIONS" EDN ELECTRICAL DESIGN NEWS, CAHNERS PUBLISHING CO. NEWTON, MASSACHUSETTS, US, vol. 45, no. 15, 20 July 2000 (2000-07-20), pages 125-126,128,131-132,135-136, XP001129405 ISSN: 0012-7515

## Description

"This invention relates to the receipt and playback ofpacketized real-time data".

With the growing emphasis on convergence in the semiconductor industry, new products must be able to transport information from any interface to any other interface, convert from any information format to another, and provide new services and technologies as they are introduced. The capability of transmitting voice over a packet network is a hallmark of the convergence revolution. In Voice-over-IP (VoIP), the analog voice source is digitized and quantized into samples, and these samples are packed together into payload units. A header is affixed to each payload unit, and the resulting packet is sent over a network to its destination. In addition to containing lower layer fields such as routing information for the packet, the packet header must also contain reordering and re-timing information that can be used by the destination to play out the audio samples for that packet, and all packets of the same voice call, correctly and without distortion.

One problem is that in this new convergent arena, there may be many different approaches to conveying essentially the same information about a VoIP payload. The Real-Time Transport Protocol (RTP) documented in RFC-1889, provides a set of end-to-end functions suitable for transmitting voice payloads over an IP network. The RTP header format defines among other things a 32-bit-source identifier, a 7-bit payload type, a 16-bit sequence number, and a 32-bit time stamp. On the other hand, a Service Specific Convergence Sublayer (SSCS) specification, documented in ITU-T Recommendation I.366.2, provides a set of formats and procedures useful for conveying voice payloads over AAL2. The SSCS header format defines a 5-bit UUI codepoint to be partitioned, depending on the profile for that connection, between a payload type field and a sequence number. Of course, there exists many other examples of such protocols.

In the past, hardware design for VoIP has been specifically tailored to the protocol to be supported. This classical approach may have been adequate in the post, because one device supported one protocol. However, as stated earlier, with the growing emphasis on convergence, the devices are expected to handle multiple protocols, in principle converting from any VoIP encapsulation to any other. The present invention provides a meta-architecture, a design methodology, for multi-protocol VoIP handling. With this design approach, all of the redundancy among protocols has been captured and modularised, so that the vast majority of the hardware design can be reused from one implementation to another, saving much engineering effort

US 5630005 relates to a system for searching for a particular playback time index in a mixed audio/video file storing variable rate encoded content, but is not concerned with real-time playback restraints and provides a solution for only a single encoding protocol.

Additional objects, advantages and novel features of the invention will be set forth in part in the description which follows, and in part will become apparent to those skilled in the art upon examination of the following or may be learned by practice of the invention. The objects and advantages of the invention may be realised and attained by means of instrumentalities and combinations particularly pointed out in the appended claims.

In accordance with one aspect of the invention, a method for processing disparate protocol compliant real-time data packets at a receiver communication network node for real-time playback of the data content conveyed is provided. Each real-time data packet is received at a corresponding protocol specific preprocessing plug-in communicatively coupled to a generic playback engine for playing back data content substantially in real-time. The real-time data packet has an associated protocol specific time stamp. The protocol specific time stamp is parsed from the received real-time data packet. And, the parsed time stamp is converted to a converted time stamp readable by the generic protocol engine.

In accordance with another aspect of the invention, a packet reception apparatus for preprocessing real-time data packets at a receiver communication network node for real-time playback of data content conveyed therein is provided. A generic playback engine plays back conveyed data content substantially in real-time. A protocol specific plug-in is communicatively coupled to the generic playback engine and receives protocol specific real-time data packets. The plug-in further includes a preprocessor for inspecting each received packet in real-time to parse a time stamp specified therein, and a time stamp converter (22) for converting the parsed time stamp to a converted time stamp readable by the generic protocol engine.

In accordance with a yet another aspect of the invention, a computer readable medium storing computer readable instructions for preprocessing real-time data packets at a receiver communications network node is provided. The computer readable instructions include computer readable instructions implementing a generic playback engine for playing back data content substantially in real-time, and computer readable instructions implementing a protocol specific plug-in communicatively coupled to the generic playback engine for receiving protocol specific real-time data packets. The instructions implementing the protocol specific plug-in further include instructions for inspecting each received packet in real-time to parse a time stamp specified therein, and instructions for converting the parsed time stamp to a converted time stamp readable by the generic protocol engine.

The invention contemplates a modularised playback system comprising a generic playback engine coupled to a protocol specific module. These components are reusable for any real-time or VoIP protocol. Protocol specific plug-ins are used to convert and format the arriving task if necessary and extract any necessary information for the playback engine. Because the protocol specific module converts data packets to a predetermined format acceptable by the generic playback engine, the same playback engine may be used with any protocol by switching to the appropriate protocol specific module.

The protocol specific module receives a packet. This module is comprised of two components, a preprocessor and a time stamp generating module. The preprocessor parses and obtains any information required by the playback engine, such as a time stamp in the packet's native format. The time stamp generating module generates a time stamp for the packet that is compatible with the generic playback engine.

The generic playback engine processes a packet with a predetermined time stamp. The generic playback engine comprises a time stamp to playback time translator and a comparator. The time stamp to playback time translator means calculates a playback time for the packet. In calculating the playback time, the translator means preferably adds to the time stamp an observed delay time and jitter delay. The observed delay time is a combination of remote to local clock mapping and propagation delay. The jitter delay enables the playback engine is to accommodate packets arriving out of order or at an inconsistent rate. The comparator compares the playback time to the local time and plays back the packet at the appropriate time. Of course, if the protocol being used is compatible with the generic playback engine, then a protocol specific module is not required.

By way of operation, a packet is received by the protocol specific module. The packet is parsed by the preprocessor. The packet is then forwarded to the time stamp generator which determines the packet's time stamp in the packet's original format and then generates a time stamp that is compatible with the generic playback engine. The packet with converted time stamp is then forwarded to the generic playback engine where it is processed by the time stamp to playback time translator means. The translator means then determines the playback time. In generating a playback time, the translator means obtains the time stamp and adds a delay factor. The delay factor is preferably comprised of two components, an observed delay and a jitter delay. The observed delay component is the sum of local to remote clocking mapping inconsistencies and propagation delay. Jitter delay, which is usually adjustable, enables the playback engine to accommodate packets that are received out of order or at an inconsistent rate. A comparator then holds the packet until the appropriate time and it is then played back.

Among those benefits and improvements that have been disclosed, other objects and advantages of this invention will become apparent from the following description taken in conjunction with the accompanying drawings. The drawings constitute a part of this specification and include exemplary embodiments of the present invention and illustrate various objects and features.

### BRIEF DESCRIPTION OF THE SEVERAL VIEWS OF THE DRAWING

The drawings illustrate the best mode presently contemplated of carrying out the invention.
FIG. 1 is a block drawing the system contemplated by the present invention coupled to a protocol specific plug-in;
FIG. 2 is a more detailed block diagram of the system of the present invention and the protocol specific plug-in shown in Fig. 1
FIG 3 is a block diagram of the operation of the present invention.

### DETAILED DESCRIPTION OF INVENTION

The generic multi-protocol playback engine present invention contemplates a modularized system comprising a generic playback engine that is coupled to a protocol specific plug-in module when necessary. In the preferred embodiment, the engine and protocol specific plug-in module are developed in hardware, however as those skilled in the art can readily appreciate, the modular design of the present invention may be comprised of hardware, software, or a combination thereof.

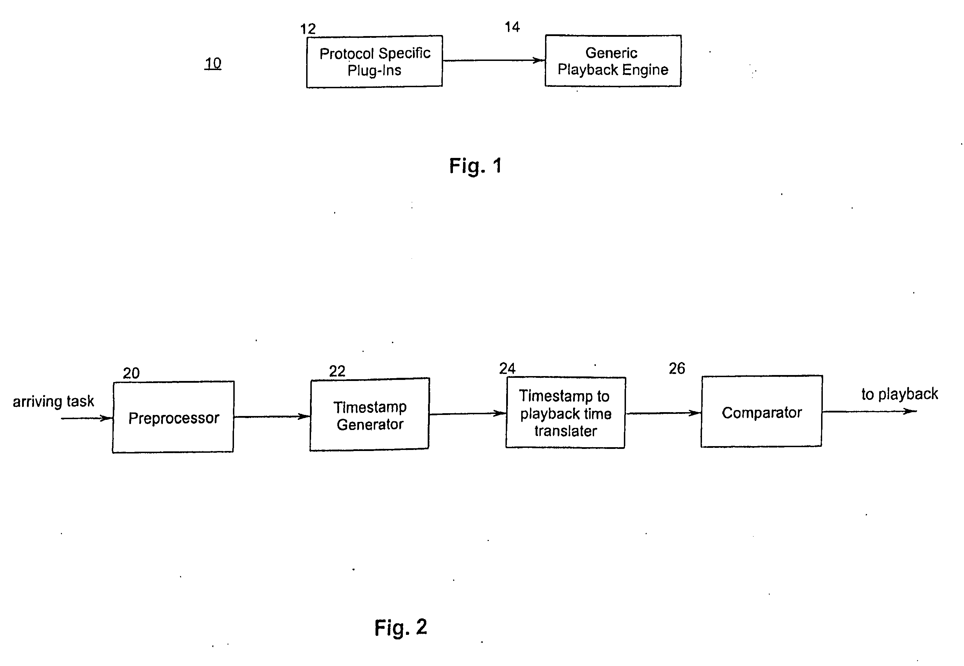

Referring to Figure 1, there is shown a block diagram of an embodiment of the present invention, generally designated 10. An arriving task is processed by a protocol specific plug-in 12 and is then forwarded to a generic playback engine 14. After the task is processed by the generic playback engine 14, the output may be sent to a playback device for output or to another component of the playback engine for further processing. The present invention is primarily concerned with algorithms for VoIP, such as translating the timestamp to a playback time, and designs for implementing the algorithms such that reusable hardware devices may implemented which are protocol independent, not with the actual playing back of the task

In the preferred embodiment, the input to the Playback Engine 14 is a packet with a 32-bit timestamp, such as provided in RTP. If the protocol is something other than what the playback engine 14 is designed to accept, then a protocol-specific plug-in 12 must generate a timestamp from whatever is in the packet's header.

Referring to Figure 2, there is shown a more detailed description of the present invention. The preprocessor 20 and timestamp generator 22 comprise the protocol specific plug-in module 12 while the timestamp to playback time translator 24 and the comparator 26 comprise the generic playback engine 14. It is contemplated that the functions of these components may be executed in hardware, software, or a combination thereof.

The operation of the playback engine of Figure 2 will now be explained. A task (not shown), typically a received VoIP packet will arrive at the protocol specific plug-in module 12. The preprocessor 20 parses the packet and obtains any information needed by the playback engine 14 or the timestamp generator 22 such as the timestamp of the packet in its native format. The timestamp generator 22 then converts the timestamp from the packet's original format to a format compatible with the generic playback engine 14. The packet is then forwarded to the generic playback engine 14. The Translator 24 resolves the playback time of the task using the timestamp either explicitly provided in the packet header or implicitly generated from the information in the header. Preferably, the task will contain a 32-bit timestamp representing the time at which the first audio sample in the packet was generated from the analog source. The timestamp enables the approximately playback time to be extrapolated from the packet. In order to ensure that the audio does not sound distorted at the receiving end, , the sampling time, tₛ, is mapped to the playback time, tₚ, wherein the mapping is a simple additive translation: tₚ - tₛ + Δ.

In order to determine an appropriate value for Δ it should be noted that the mapping from timestamp to playback time is the sum of three components, the difference between the sender's and receiver's clocks, the propagation delay of the packets from sender to receiver, and jitter tolerance.

The first component in determining Δ is the remote-to-local clock mapping. The clocks on two different computers are typically not synchronized and thus each computer has its own time. However, the clock rate, for example 8 kHz, is usually negotiated once beforehand. Handshaking protocols for negotiating clock rates are well known in the art. In contrast, its much harder to negotiate the actual reading of the clock at any given time without a synchronous source available to both sides, for example a satellite (GPS). Therefore, in IP networks, it is typically accepted that both sides have clocks with a reasonably accurate clock rate, as per the negotiated frequency, but the value of any clock on the network is arbitrary at any given time. It should be noted that there are systems that negotiate clock rate every 125 micro seconds, but not the actual timestamp.

For example, the receiver's clock may read 192 while the sender's clock reads 901, thus the first component of the additive translation factor Δ, remote-to-local clock mapping, is computed by calculating the difference between the clocks, which in this example is 901-192 = 709.

The second factor in determining Δ is the propagation delay. Even if the clocks on the sending and receiving end were synchronized, it still takes some time for a packet to propagate from the sender to the receiver. This delay must also be a part of the additive translation factor Δ used in calculating the playback time from the sending timestamp.

The third factor in determining Δ is jitter tolerance. If only the remote to local clock mapping and propagation delay are used in calculating Δ, then the playback time would always equal the sampling time, calibrated for the remote-to-local clock difference, plus the delay required to transfer the packet from the sender to the receiver. While this approach would work if packets arrived at a constant rate, in practice, especially for IP networks, this is not always the case. Some packets may arrive faster than expected and in bursts while other packets may take a longer time to arrive. This variation in packet arrival rate is known as jitter. In order to compensate for jitter, a playback engine must buffer packets an amount of time sufficient to allow the orderly, regular playout of the packets. Therefore, in order to compensate for jitter, an additional playback delay is inserted, which must also be used in calculating Δ. Typically, acceptable jitter delay is usually between 128 and 256 milliseconds and is programmed into the system.

While these three factors theoretically comprise Δ, in practice the first two factors, remote-to-local clock mapping and propagation delay, are indistinguishable. The sum of the effects of the first two factors, the observed delay or d₀, can be determined by observation by subtracting the sampling time, for example the sender's timestamp, from the arrival time on the receiver's clock. This difference, d₀ embodies the sum of the effects of the remote-to-local clock mapping and the propagation delay. At the beginning of a call, the average value of the observed delays may be used for calculating a resulting mean d₀ for that call. For example, the observed delay of the first four packets may be utilized to calculate d₀.

Jitter tolerance, d₁, is a programmable value for each call. Therefore, the value of Δ is determined by Δ = d₀ + d₁.

After the Timestamp to Playback Time Translator 24 has processed the task, it is forwarded to the Compare playback time against current time sub-block 26. Logically, once a playback time has been assigned, the time is constantly monitored and compared against the current time. When they are equal, the packet or task is played back. A buffer is often used to actually implement this block.

As contemplated by the present invention, the generic playback engine 14 is designed once and then reused for any VoIP encapsulation protocol. In cutting edge convergent products, this reuse can even occur within the same product, since multiple VoIP protocols may be supported. In order to reuse a single instantiation of the generic playback engine 14, a protocol specific plug-in 12 for each protocol must be supplied for each protocol supported.

While the embodiments of Figs 1 and 2 show a one to one correlation between protocol specific plug-ins and playback engines, it is also contemplated that a plurality of protocol specific plug-ins may be coupled to a single playback engine. Multiplexing or other switching means may be used to select the appropriate protocol specific plug-in. For example the protocol specific plug-ins may be programmed to only produce an output when the received packet is recognized as being for the protocol specific plug-in.

Furthermore, it is also contemplated that the generic playback engine 14 of the present invention may also be designed so that it may operate without a protocol specific plug-in for a specific protocol. For example, if the generic playback engine 14 is designed to read RTP formatted packets, then when the playback engine is used for a device on an RTP compatible network, no protocol specific plug-in 12 is necessary. However, the protocol specific plug-in 12 is necessary for any non-RTP compatible network. In this embodiment, the protocol specific plug-in 12 would have to convert any received packets into an RTP compatible format with an RTP compatible time stamp.

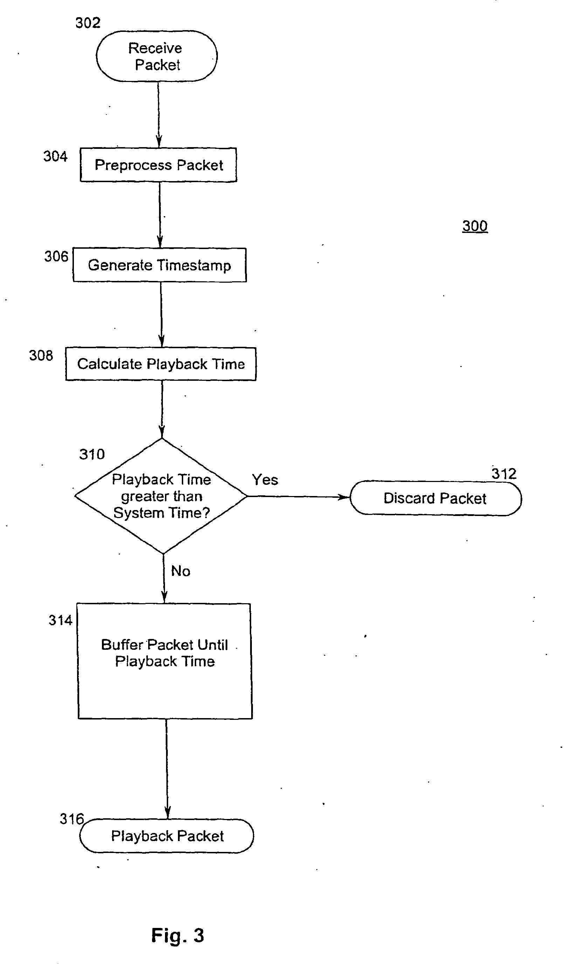

Referring now to Fig. 3 there is shown a method contemplated by the system of the present invention generally designated 300. At step 302 a packet is received. The packet would be received by the protocol specific plug in 12 from a receiver. At step 304 the preprocessor 20 processes the packet so that it is compatible with the generic playback engine 14. The preprocessing may include, but is not limited to, reformatting the header of the packet, extracting information such as the packet's timestamp in its original format, and obtaining reordering and re-timing data. At step 306 the packet is processed by the timestamp generator 22. The timestamp generator generates a timestamp such as an RTP like timestamp for use by the generic playback engine 14. The module 12 is protocol specific and converts the packet's timestamp to a format that is compatible with the generic playback engine 14.

At step 308, the packet is being processed by the timestamp to playback time translator 24 of the generic playback engine 14. The playback time is calculated by adding additive translation factor Δ to the packet's timestamp. As previously discussed, the additive translation factor Δ is comprised of three components, a remote to local clock mapping component, a propagation delay component, and a jitter tolerance component.

After calculating the playback time, at step 310 the playback time is compared to the system time. If the playback time is greater than the system time, then as shown at step 312 the packet is discarded.

If the playback time is not greater than the system time in step 310, then processing continues at step 314. At step 314 the packet is buffered until the playback time whereupon at step 316 it is then sent to a playback device.

While the present invention has been described as converting the timestamp to RTP, those skilled in the art can readily appreciate that any timestamp that enables the playback engine to determine with certainty the playback time may be utilized.

Although the invention has been shown and described with respect to a certain preferred embodiment, it is obvious that equivalent alterations and modifications will occur to others skilled in the art upon the reading and understanding of this specification. The present invention includes all such equivalent alterations and modifications and is limited only by the scope of the following claims.

## Claims

1. A method for processing disparate protocol compliant real-time data packets at a receiver communication network node for real-time playback of the data content conveyed, the method being **characterized by**:
receiving each real-time data packet at a corresponding protocol specific preprocessing plug-in (12) communicatively coupled to a generic playback engine (14) for playing back (316) data content substantially (314) in real-time, the real-time data packet having an associated protocol specific time stamp;
parsing (304) the protocol specific time stamp from the received real-time data packet; and
converting (306) the parsed time stamp to a converted time stamp readable by the generic playback engine (14).

2. A method according to claim 1, wherein each real-time data packet has a protocol specific format, the method being further **characterized by**:
parsing (304) the real-time data content conveyed in each received real-time data packet; and
converting (304) the parsed data content to converted data content readable by the generic playback engine (14).

3. A method according to claim 1or 2, further **characterized by** discarding (312) a real-time data packet if, based on the corresponding converted time stamp, it is determined (310) that the real-time data conveyed in the data packet was received late.

4. A method according to claims 1, 2 or 3, further **characterized by**:
determining (308) a playback time from the value of the converted time stamp; and
providing the generic playback engine (14) with the determined playback time along with the real-time data content to cause playback (316) thereof in real-time substantially (314) at the determined playback time.

5. A method according to claim 4, wherein determining the playback time is further **characterized by** adding (308) to the converted time stamp an observed transport delay, and/or a jitter delay.

6. A method according to claim 5, wherein adding the observed transport delay is further **characterized by** obtaining the observed transport delay by averaging observed transport delays incurred by a group of real-time data packets received.

7. A method according to claims 1 to 6, wherein the real-time data packet further comprises a Voice over Internet Protocol packet.

8. A method according to claims 1 to 7, wherein the generic playback engine is Real Time Protocol compliant.

9. A packet reception apparatus for preprocessing real-time data packets at a receiver communication network node for real-time playback of data content conveyed therein, the packet reception apparatus (10) being **characterized by**:
a generic playback engine (14) for playing back (316) conveyed data content substantially in real-time; and
a protocol specific plug-in (12) communicatively coupled to the generic playback engine (14) for receiving protocol specific real-time data packets, the protocol specific plug-in (12) comprising:
i. a preprocessor (20) for inspecting each received packet in real-time to parse (304) a time stamp specified therein; and
ii. a time stamp converter (22) for converting (306) the parsed time stamp to a converted time stamp readable by the generic playback engine (14).

10. An apparatus according to claim 9, wherein one of the parsed time stamp and the converted time stamp comprises a Real Time Protocol compliant time stamp.

11. An apparatus according to claim 9 or 10, wherein the real-time data packet conveys data content having a protocol specific format, the apparatus being further **characterized by**:
the preprocessor (20) further inspecting each received packet to parse (304) the real-time data content received therein; and
a protocol converter for converting (304) the parsed data content to a converted data content readable by the generic playback engine (14).

12. An apparatus according to claims 9, 10 or 11, further **characterized by** playback time determination means (24) for determining (308) a playback time from the value of the converted time stamp, the determined playback time being selectively (310) provided to the generic playback engine (14) along with the real-time data content to cause playback (316) substantially (314) at the determined playback time if at least one time value specified by the converted time stamp and the determined playback time is greater or equal to the then present time.

13. An apparatus according to claim 12, wherein the playback time determination means (24) is further **characterized by** computer readable instructions stored on a computer readable medium coded to determine (308) the playback time when executed.

14. An apparatus according to claim 13, wherein the computer readable instructions stored on a computer readable medium are further **characterized by**:
instructions executable to determine an observed transport delay; and
instructions executable to determine a jitter delay.

15. An apparatus according to claims 12, 13 or 14, wherein one of the playback determination means (24) and the generic playback engine (14) is further **characterized by** comparison means (26) comprising computer readable instructions stored on a computer readable medium coded to determine (310), when executed, whether to play back the data content received.

16. An apparatus according to claim 12, 13, 14 or 15, wherein the playback time determination means (24) is further **characterized by** time addition means configured to selectively add to the converted time stamp an observed transport delay, and/or a jitter delay.

17. An apparatus according to claim 16, wherein the time addition means is further **characterized by** computer readable instructions stored on a computer readable medium coded to selectively add to the converted time stamp, when executed, the observed transport delay, and/or the jitter delay.

18. A computer readable medium storing computer readable instructions for preprocessing real-time data packets at a receiver communications network node, the computer readable instructions being **characterized by**
computer readable instructions implementing a generic playback engine (14) for playing back (316) data content substantially (314) in real-time;
computer readable instructions implementing a protocol specific plug-in (12) communicatively coupled to the generic playback engine (14) for receiving protocol specific real-time data packets, further comprising:
i. instructions for inspecting each received packet in real-time to parse (304) a time stamp specified therein;
ii. instructions for converting (306) the parsed time stamp to a converted time stamp readable by the generic playback engine (14).

19. A computer readable medium storing instructions according to claim 18, further **characterized by** one of the parsed time stamp and the converted time stamp comprising a Real Time Protocol compliant time stamp.

20. A computer readable medium storing instructions according to claim 18 or 19, wherein the real-time data packet conveys data content having a protocol specific format, the computer readable medium storing instructions further being **characterized by**:
instructions executable to inspect each received packet to parse (304) the real-time data content received therein; and
instructions executable to convert (304) the parsed data content to converted data content readable by the generic playback engine (14).

21. A computer readable medium storing instructions according to claims 18, 19 or 20, further **characterized by**:
instructions executable to determine (308) a playback time from the value of the converted time stamp;
instructions executable to selectively (310) provide the determined playback time to the generic playback engine (14) along with the real-time data content for playback (316) substantially (314) at the determined playback time if one of the time values specified by the converted time stamp and the determined playback time is greater or equal to the then present time.

22. A computer readable medium storing instructions according to claim 21, wherein one of the playback time determination instructions and the instructions implementing the generic playback engine (14) is further **characterized by** instructions executable to determine (310) whether to play back the data content received.

23. A computer readable medium storing instructions according to claim 21 or 22, wherein the instructions executable to determine (308) the playback time are further **characterized by**:
instructions executable to determine an observed transport delay;
instructions executable to determine a jitter delay; and
instructions executable to selectively add to the converted time stamp the observed transport delay, and/or the jitter delay.

## Patentansprüche

1. Verfahren zur Verarbeitung von mit unvereinbaren Protokollen kompatiblen Echtzeit-Datenpaketen in einem Empfänger-Kommunikationsnetzwerkknoten zur Echtzeit-Wiedergabe des übermittelten Dateninhalts, wobei das Verfahren **gekennzeichnet ist durch**:
Empfangen jedes Echtzeit-Datenpakets in einem entsprechenden protokollspezifischen Vorverarbeitungsmodul (12), das mit einer generischen Wiedergabemaschine (14) kommunikationsfähig verbunden ist, um Dateninhalt im wesentlichen (314) in Echtzeit wiederzugeben (316), wobei das Echtzeit-Datenpaket einen zugeordneten protokollspezifischen Zeitstempel hat;
syntaktisches Bestimmen (304) des protokollspezifischen Zeitstempels aus dem empfangenen Echtzeit-Datenpaket; und
Konvertieren (306) des syntaktisch bestimmten Zeitstempels in einen konvertierten Zeitstempel, der von der generischen Wiedergabemaschine (14) gelesen werden kann.

2. Verfahren nach Anspruch 1, wobei jedes Echtzeit-Datenpaket ein protokollspezifisches Format hat, wobei das Verfahren ferner **gekennzeichnet ist durch**:
syntaktisches Bestimmen (304) des in jedem empfangenen Echtzeit-Datenpaket übermittelten Echtzeit-Dateninhalts; und
Konvertieren (304) des syntaktisch bestimmten Dateninhalts in konvertierten Dateninhalt, der von der generischen Wiedergabemaschine (14) gelesen werden kann.

3. Verfahren nach Anspruch 1 oder 2, ferner **gekennzeichnet durch** Verwerfen (312) eines Echtzeit-Datenpakets, wenn auf der Grundlage des entsprechenden konvertierten Zeitstempels bestimmt wird (310), daß die in dem Datenpaket übermittelten Echtzeit-Daten zu spät empfangen wurden.

4. Verfahren nach Anspruch 1, 2 oder 3, ferner **gekennzeichnet durch**:
Bestimmen (308) einer Wiedergabezeit aus dem Wert des konvertierten Zeitstempels; und
Versorgen der generischen Wiedergabemaschine (14) mit der bestimmten Wiedergabezeit zusammen mit dem Echtzeit-Dateninhalt, um dessen Wiedergabe (316) in Echtzeit im wesentlichen (314) zu der bestimmten Wiedergabezeit zu bewirken.

5. Verfahren nach Anspruch 4, wobei das Bestimmen der Wiedergabezeit ferner **gekennzeichnet ist durch** Addieren (308) einer beobachteten Transportverzögerung und/oder einer Jitter-Verzögerung zum konvertierten Zeitstempel.

6. Verfahren nach Anspruch 5, wobei das Addieren der beobachteten Transportverzögerung ferner **gekennzeichnet ist durch** Erlangen der beobachteten Transportverzögerung **durch** Mitteln der beobachteten Transportverzögerungen, erfahren durch eine Gruppe von empfangenen Echtzeit-Datenpaketen.

7. Verfahren nach einem der Ansprüche 1 bis 6, wobei das Echtzeit-Datenpaket ferner ein Sprache-über-Internetprotokoll-Paket umfaßt.

8. Verfahren nach einem der Ansprüche 1 bis 7, wobei die generische Wiedergabemaschine mit dem Echtzeit-Protokoll kompatibel ist.

9. Paketempfangsvorrichtung zur Vorverarbeitung von Echtzeit-Datenpaketen in einem Empfänger-Kommunikationsnetzwerkknoten zur Echtzeit-Wiedergabe von darin übermitteltem Dateninhalt, wobei die Paketempfangsvorrichtung (10) **gekennzeichnet ist durch**:
eine generische Wiedergabemaschine (14) zur Wiedergabe (316) von übermitteltem Dateninhalt im wesentlichen in Echtzeit; und
ein protokollspezifisches Modul (12), das mit der generischen Wiedergabemaschine (14) kommunikationsfähig gekoppelt ist, zum Empfangen von protokollspezifischen Echtzeit-Datenpaketen, wobei das protokollspezifische Modul (12) umfaßt:
i. einen Vorprozessor (20) zum Inspizieren jedes empfangenen Pakets in Echtzeit, um einen darin festgelegten Zeitstempel syntaktisch zu bestimmen (304); und
ii. einen Zeitstempel-Konverter (22) zum Konvertieren (306) des syntaktisch bestimmten Zeitstempels in einen konvertierten Zeitstempel, der von der generischen Wiedergabemaschine (14) gelesen werden kann.

10. Vorrichtung nach Anspruch 9, wobei entweder der syntaktisch bestimmte Zeitstempel oder der konvertierte Zeitstempel einen mit dem Echtzeit-Protokoll kompatiblen Zeitstempel umfaßt.

11. Vorrichtung nach Anspruch 9 oder 10, wobei das Echtzeit-Datenpaket Dateninhalt mit einem protokollspezifischen Format übermittelt, wobei die Vorrichtung ferner **gekennzeichnet ist durch**:
den Vorprozessor (20), der ferner jedes empfangene Paket inspiziert, um den darin empfangenen Echtzeit-Dateninhalt syntaktisch zu bestimmen (304); und
einen Protokoll-Konverter zum Konvertieren (304) des syntaktisch bestimmten Dateninhalts in einen konvertierten Dateninhalt, der von der generischen Wiedergabemaschine (14) gelesen werden kann.

12. Vorrichtung nach Anspruch 9, 10 oder 11, ferner **gekennzeichnet durch** ein Wiedergabezeit-Bestimmungsmittel (24) zum Bestimmen (308) einer Wiedergabezeit aus dem Wert des konvertierten Zeitstempels, wobei die bestimmte Wiedergabezeit zusammen mit dem Echtzeit-Dateninhalt selektiv (310) an die generische Wiedergabemaschine (14) übergeben wird, um die Wiedergabe (316) im wesentlichen (314) zu der bestimmten Wiedergabezeit zu bewirken, wenn mindestens ein **durch** den konvertierten Zeitstempel und die bestimmte Wiedergabezeit festgelegter Zeitwert größer oder gleich der aktuellen Zeit ist.

13. Vorrichtung nach Anspruch 12, wobei das Wiedergabezeit-Bestimmungsmittel (24) ferner **gekennzeichnet ist durch** computerlesbare Anweisungen, die auf einem computerlesbaren Medium gespeichert sind und die dafür codiert sind, bei Ausführung die Wiedergabezeit zu bestimmen (308).

14. Vorrichtung nach Anspruch 13, wobei die auf einem computerlesbaren Medium gespeicherten computerlesbaren Anweisungen ferner **gekennzeichnet sind durch**:
Anweisungen, die ausführbar sind, um eine beobachtete Transportverzögerung zu bestimmen; und
Anweisungen, die ausführbar sind, um eine Jitter-Verzögerung zu bestimmen.

15. Vorrichtung nach einem der Ansprüche 12, 13 oder 14, wobei entweder das Wiedergabezeit-Bestimmungsmittel (24) oder die generische Wiedergabemaschine (14) ferner **gekennzeichnet ist durch** ein Vergleichsmittel (26) mit computerlesbaren Anweisungen, die auf einem computerlesbaren Medium gespeichert sind und die dafür codiert sind, bei Ausführung zu bestimmen (310), ob der empfangene Dateninhalt wiedergegeben werden soll.

16. Vorrichtung nach einem der Ansprüche 12, 13, 14 oder 15, wobei das Wiedergabezeit-Bestimmungsmittel (24) ferner **gekennzeichnet ist durch** ein Zeitadditionsmittel, das dafür konfiguriert ist, eine beobachtete Transportverzögerung und/oder eine Jitter-Verzögerung selektiv zum konvertierten Zeitstempel zu addieren.

17. Vorrichtung nach Anspruch 16, wobei das Zeitadditionsmittel ferner **gekennzeichnet ist durch** computerlesbare Anweisungen, die auf einem computerlesbaren Medium gespeichert sind und die dafür codiert sind, die beobachtete Transportverzögerung und/oder die Jitter-Verzögerung bei Ausführung selektiv zum konvertierten Zeitstempel zu addieren.

18. Computerlesbares Medium, das computerlesbare Anweisungen speichert, zur Vorverarbeitung von Echtzeit-Datenpaketen in einem Empfänger-Kommunikationsnetzwerkknoten, wobei die computerlesbaren Anweisungen **gekennzeichnet sind durch**:
computerlesbare Anweisungen, die eine generische Wiedergabemaschine (14) implementieren, zur Wiedergabe (316) von Dateninhalt im wesentlichen in Echtzeit;
computerlesbare Anweisungen, die ein protokollspezifisches Modul (12) implementieren, das mit der generischen Wiedergabemaschine (14) kommunikationsfähig verbunden ist, zum Empfangen von protokollspezifischen Echtzeit-Datenpaketen ferner umfassend:
i. Anweisungen zum Inspizieren jedes empfangenen Pakets in Echtzeit, um einen darin festgelegten Zeitstempel syntaktisch zu bestimmen (304); und
ii. Anweisungen zum Konvertieren (306) des syntaktisch bestimmten Zeitstempels in einen konvertierten Zeitstempel, der von der generischen Wiedergabemaschine (14) gelesen werden kann.

19. Computerlesbares Medium, das Anweisungen speichert, nach Anspruch 18, ferner **dadurch gekennzeichnet, daß** entweder der syntaktisch bestimmte Zeitstempel oder der konvertierte Zeitstempel einen mit dem Echtzeit-Protokoll kompatiblen Zeitstempel umfaßt.

20. Computerlesbares Medium, das Anweisungen speichert, nach Anspruch 18 oder 19, wobei das Echtzeit-Datenpaket Dateninhalt mit einem protokollspezifischen Format übermittelt, wobei das computerlesbare Medium, das computerlesbare Anweisungen speichert, ferner **gekennzeichnet ist durch**:
Anweisungen, die ausführbar sind, um jedes empfangene Paket zu inspizieren, um den darin empfangenen Echtzeit-Dateninhalt syntaktisch zu bestimmen (304); und
Anweisungen, die ausführbar sind, um den syntaktisch bestimmten Dateninhalt in konvertierten Dateninhalt zu konvertieren, der von der generischen Wiedergabemaschine (14) gelesen werden kann.

21. Computerlesbares Medium, das Anweisungen speichert, nach Anspruch 18, 19 oder 20, ferner **gekennzeichnet durch**:
Anweisungen, die ausführbar sind, um eine Wiedergabezeit aus dem Wert des konvertierten Zeitstempels zu bestimmen (308);
Anweisungen, die ausführbar sind, um die bestimmte Wiedergabezeit zusammen mit dem Echtzeit-Dateninhalt selektiv (310) an die generische Wiedergabemaschine (14) zu übergeben, um die Wiedergabe (316) im wesentlichen (314) zu der bestimmten Wiedergabezeit zu bewirken, wenn einer der **durch** den konvertierten Zeitstempel und die bestimmte Wiedergabezeit festgelegten Zeitwerte größer oder gleich der aktuellen Zeit ist.

22. Computerlesbares Medium, das Anweisungen speichert, nach Anspruch 21, wobei entweder die Wiedergabezeit-Bestimmungsanweisungen oder die Anweisungen, die die generische Wiedergabemaschine (14) implementieren, ferner durch Anweisungen **gekennzeichnet** sind, die ausführbar sind, um zu bestimmen (310), ob der empfangene Dateninhalt wiedergegeben werden soll.

23. Computerlesbares Medium, das Anweisungen speichert, nach Anspruch 21 oder 22, wobei die Anweisungen, die ausführbar sind, um die Wiedergabezeit zu bestimmen (308), ferner **gekennzeichnet sind durch**:
Anweisungen, die ausführbar sind, um eine beobachtete Transportverzögerung zu bestimmen;
Anweisungen, die ausführbar sind, um eine Jitter-Verzögerung zu bestimmen; und
Anweisungen, die ausführbar sind, um die beobachtete Transportverzögerung und/oder die Jitter-Verzögerung selektiv zum konvertierten Zeitstempel zu addieren.

## Revendications

1. Procédé pour traiter des paquets de données en temps réel conformes à des protocoles disparates au niveau d'un noeud de récepteur de réseau de communication pour une reproduction en temps réel du contenu de données convoyé, le procédé étant **caractérisé par** :
la réception de chaque paquet de données en temps réel au niveau d'un module d'extension de prétraitement spécifique de protocole correspondant (12) couplé en communication à un moteur de reproduction générique (14) pour reproduire (316) un contenu de données sensiblement (314) en temps réel, le paquet de données en temps réel disposant d'un horodatage spécifique de protocole associé ;
l'analyse syntaxique (304) de l'horodatage spécifique de protocole à partir du paquet de données en temps réel reçu ; et
la conversion (306) de l'horodatage analysé syntaxiquement en un horodatage converti lisible par le moteur de reproduction générique (14).

2. Procédé selon la revendication 1, dans lequel chaque paquet de données en temps réel présente un format spécifique de protocole, le procédé étant en outre **caractérisé par** :
l'analyse syntaxique (304) du contenu de données en temps réel qui est convoyé dans chaque paquet de données en temps réel reçu ; et
la conversion (304) du contenu de données analysé syntaxiquement en un contenu de données converti lisible par le moteur de reproduction générique (14).

3. Procédé selon la revendication 1 ou 2, **caractérisé en outre par** la mise à l'écart (312) d'un paquet de données en temps réel si, sur la base de l'horodatage converti correspondant, il est déterminé (310) que les données en temps réel convoyées dans le paquet de données ont été reçues tard.

4. Procédé selon la revendication 1, 2 ou 3, **caractérisé en outre par** :
la détermination (308) d'un temps de reproduction à partir de la valeur de l'horodatage converti ; et
fournir au moteur de reproduction générique (14) le temps de reproduction déterminé en association avec le contenu de données en temps réel pour provoquer sa reproduction (316) en temps réel (314) sensiblement au temps de reproduction déterminé.

5. Procédé selon la revendication 4, dans lequel la détermination du temps de reproduction est en outre **caractérisée par** l'addition (308) à l'horodatage converti d'un retard de transport observé et/ou d'un retard de tremblement.

6. Procédé selon la revendication 5, dans lequel l'addition du retard de transport observé est en outre **caractérisée par** l'obtention du retard de transport observé en moyennant les retards de transport observés qui sont subis par un groupe de paquets de données en temps réel reçus.

7. Procédé selon les revendications 1 à 6, dans lequel le paquet de données en temps réel comprend en outre un paquet de Protocole Voix sur Internet.

8. Procédé selon les revendications 1 à 7, dans lequel le moteur de reproduction générique est conforme au Protocole en Temps Réel.

9. Appareil de réception de paquets pour prétraiter des paquets de données en temps réel au niveau d'un noeud de récepteur de réseau de communication pour une reproduction en temps réel d'un contenu de données convoyé dedans, l'appareil de réception de paquets (10) étant **caractérisé par** :
un moteur de reproduction générique (14) pour reproduire (316) sensiblement en temps réel un contenu de données convoyé; et
un module d'extension spécifique de protocole (12) qui est couplé en communication au moteur de reproduction générique (14) pour recevoir des paquets de données en temps réel spécifiques de protocole, le module d'extension spécifique de protocole (12) comprenant :
i. un préprocesseur (20) pour inspecter chaque paquet reçu en temps réel afin d'analyser syntaxiquement (304) un horodatage spécifié dedans ; et
ii. un convertisseur d'horodatage (22) pour convertir (306) l'horodatage analysé syntaxiquement en un horodatage converti lisible par le moteur de reproduction générique (14).

10. Appareil selon la revendication 9, dans lequel un parmi l'horodatage analysé syntaxiquement et l'horodatage converti comprend un horodatage conforme au Protocole en Temps Réel.

11. Appareil selon la revendication 9 ou 10, dans lequel le paquet de données en temps réel convoie un contenu de données présentant un format spécifique de protocole, l'appareil étant en outre **caractérisé par** :
le préprocesseur (20) inspectant en outre chaque paquet reçu pour réaliser une analyse syntaxique (304) du contenu de données en temps réel reçu dedans ; et
un convertisseur de protocole pour convertir (304) le contenu de données analysé syntaxiquement en un contenu de données converti lisible par le moteur de reproduction générique (14).

12. Appareil selon la revendication 9, 10 ou 11, **caractérisé en outre par** un moyen de détermination de temps de reproduction (24) pour déterminer (308) un temps de reproduction à partir de la valeur de l'horodatage converti, le temps de reproduction déterminé étant de façon sélective (310) appliqué sur le moteur de reproduction générique (14) en association avec le contenu de données en temps réel pour provoquer une reproduction (316) sensiblement (314) au temps de reproduction déterminé si au moins une valeur temporelle spécifiée par l'horodatage converti et par le temps de reproduction déterminé est supérieure ou égale au temps alors courant.

13. Appareil selon la revendication 12, dans lequel le moyen de détermination de temps de reproduction (24) est en outre **caractérisé par** des instructions lisibles par ordinateur qui sont stockées sur un support lisible par ordinateur codé pour déterminer (308) le temps de reproduction lors d'une exécution.

14. Appareil selon la revendication 13, dans lequel les instructions lisibles par ordinateur qui sont stockées sur un support lisible par ordinateur sont en outre **caractérisées par** :
des instructions exécutables pour déterminer un retard de transport observé ; et
des instructions exécutables pour déterminer un retard de tremblement.

15. Appareil selon la revendication 12, 13 ou 14, dans lequel un élément pris parmi le moyen de détermination de reproduction (24) et le moteur de reproduction générique (14) est en outre **caractérisé par** un moyen de comparaison (26) qui comprend des instructions lisibles par ordinateur qui sont stockées sur un support lisible par ordinateur codé pour déterminer (310), lors d'une exécution, s'il convient de reproduire le contenu de données reçu.

16. Appareil selon la revendication 12, 13, 14 ou 15, dans lequel le moyen de détermination de temps de reproduction (24) est en outre **caractérisé par** un moyen d'addition de temps qui est configuré pour additionner de façon sélective à l'horodatage converti un retard de transport observé et/ou un retard de tremblement.

17. Appareil selon la revendication 16, dans lequel le moyen d'addition de temps est en outre **caractérisé par** des instructions lisibles par ordinateur qui sont stockées sur un support lisible par ordinateur codé pour additionner de façon sélective à l'horodatage converti, lors d'une exécution, le retard de transport observé et/ou le retard de tremblement.

18. Support lisible par ordinateur qui stocke des instructions lisibles par ordinateur pour prétraiter des paquets de données en temps réel au niveau d'un noeud de récepteur de réseau de communication, les instructions lisibles par ordinateur étant **caractérisées par** :
des instructions lisibles par ordinateur qui mettent en oeuvre un moteur de reproduction générique (14) pour reproduire (316) un contenu de données sensiblement (314) en temps réel ;
des instructions lisibles par ordinateur qui mettent en oeuvre un module d'extension spécifique de protocole (12) couplé en communication au moteur de reproduction générique (14) pour recevoir des paquets de données en temps réel spécifiques de protocole, comprenant en outre :
i. des instructions pour inspecter chaque paquet reçu en temps réel afin de réaliser une analyse syntaxique (304) d'un horodatage spécifié dedans ; et
ii. des instructions pour convertir (306) l'horodatage analysé syntaxiquement en un horodatage converti lisible par le moteur de reproduction générique (14).

19. Support lisible par ordinateur qui stocke des instructions selon la revendication 18, **caractérisé en outre par** un parmi l'horodatage analysé syntaxiquement et l'horodatage converti comprenant un horodatage conforme au Protocole en Temps Réel.

20. Support lisible par ordinateur qui stocke des instructions selon la revendication 18 ou 19, dans lequel le paquet de données en temps réel convoie un contenu de données présentant un format spécifique de protocole, le support lisible par ordinateur stockant des instructions étant en outre **caractérisé par** :
des instructions exécutables pour inspecter chaque paquet reçu afin de réaliser une analyse syntaxique (304) du contenu de données en temps réel reçu dedans ; et
des instructions exécutables pour convertir (304) le contenu de données analysé syntaxiquement en un contenu de données converti lisible par le moteur de reproduction générique (14).

21. Support lisible par ordinateur qui stocke des instructions selon les revendications 18, 19 ou 20, **caractérisé en outre par** :
des instructions exécutables pour déterminer (308) un temps de reproduction à partir de la valeur de l'horodatage converti ; et
des instructions exécutables pour, de façon sélective (310), appliquer le temps de reproduction déterminé sur le moteur de reproduction générique (14) en association avec le contenu de données en temps réel pour reproduire (316) sensiblement (314) au temps de reproduction déterminé si l'une des valeurs de temps spécifiées par l'horodatage converti et par le temps de reproduction déterminé est supérieure ou égale au temps alors courant.

22. Support lisible par ordinateur qui stocke des instructions selon la revendication 21, dans lequel un parmi les instructions de détermination de temps de reproduction et les instructions mettant en oeuvre le moteur de reproduction générique (14) est en outre **caractérisé par** des instructions pouvant être exécutées pour déterminer (310) s'il convient de reproduire le contenu de données reçu.

23. Support lisible par ordinateur qui stocke des instructions selon la revendication 21 ou 22, dans lequel les instructions exécutables pour déterminer (308) le temps de reproduction sont en outre **caractérisées par** :
des instructions exécutables pour déterminer un retard de transport observé ;
des instructions exécutables pour déterminer un retard de tremblement ; et
des instructions exécutables pour additionner de façon sélective à l'horodatage converti le retard de transport observé et/ou le retard de tremblement.
